# EUROPEAN PATENT APPLICATION

(11) **EP 0 899 579 A1**
(43) Date of publication of application: **03.03.1999**
(21) Application number: 98115982.5
(22) Date of filing: 25.08.1998
(51) Int. Cl.: G01S 7/537, G01S 7/52

(54) **Method for improving the acoustical detection and positioning of small targets**

(30) Priority: 25.08.1997 FR 9710624
(71) Applicant: IMRA EUROPE S.A., 06904 Sophia Antipolis Cedex (FR)
(72) Inventor: Bonnefoy, Pierre, 06800 Cagnes sur Mer (FR); Harroy, Franck, 06600 Antibes (FR)
(74) Representative: Kügele, Bernhard

(57) **Abstract**

This invention relates to a method for electronically controlling an ultrasonic transducer phased array to scan an observation area by acoustical lobe pattern (18), which is characterized by
- detecting at least one strong echo signal in at least one angular direction (θ₁) with respect to a reference axis (Y) of the transducer phased array , corresponding to the location of at least one high reflection object,
- controlling the transducer phased array for generating an acoustical lobe pattern (8, 8', 17) for scanning the observation area including at least two acoustical lobes (8,8') so as to position a zero sector (9) between two ultrasonic beams (8,8') on at least one identified direction (θ₁).

This present invention is well adapted to obstacle detection systems for vehicles.

## Description

### [Technical field of the invention]

This invention relates to a method for electronically controlling an ultrasonic transducer phased array to scan at least one angular sector of an observation area, the ultrasonic transducers being usable as emitters or receivers and being arranged so that an acoustical lobe pattern is generated in the observation area.

### [Background art and technical problems related to background art]

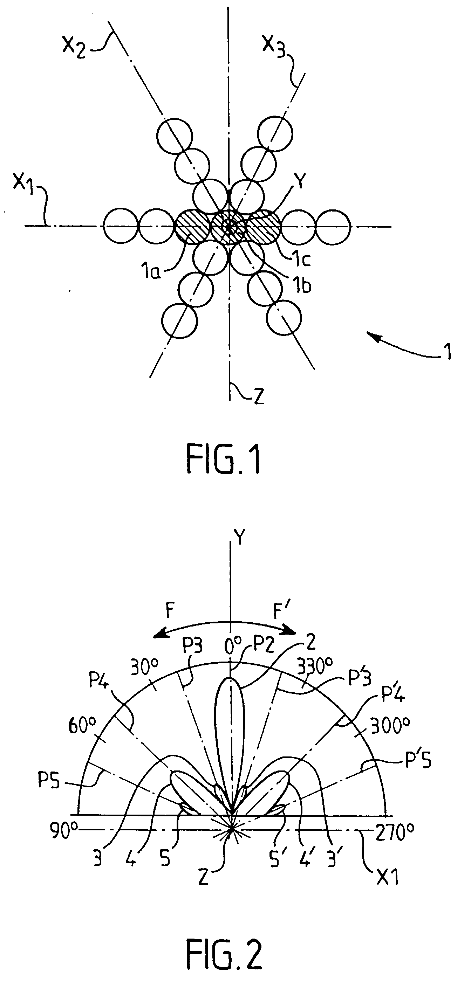

The use of ultrasonic transducer arrays in robotics for scanning an environmental area is well known in the art. One particularly interesting arrangement of ultrasonic transducers is an arrangement in lines X1, X2 and X3, as illustrated in fig.1, in which the ultrasonic transducers are arranged in a six branch-star array 1, and they are all emitting in the same direction Y. In fig. 1, three transducers which are arranged in a line, i.e. transducers 1a, 1b and 1c, forming a one-dimensional array, are used as ultrasonic wave emitters, and some transducers of the periphery are used as receivers to pick up the returned echo. In the air, the ultrasonic transducers are circular and spaced by a distance essentially corresponding to the wavelength λ, the half wavelength λ/2 or less, of the emitted ultrasonic waves. In such an array, the acoustic field of the transmitter array is given by superposing vibrations from the three emitters electronically excited with different phases, and generates the resulting focused acoustical energy beams of fig.2 in the plane (X1,Y) : a main lobe 2, two aliasing lobes 4 and 4' which are due to the spectrum aliasing because of the λ spacing, and a plurality of side lobes 3, 3', 5 and 5' which are due to the diffraction at the array aperture.

In fig.2, the "shooting" plane P2 of main lobe 2 is perpendicular to axis Z, and the secondary lobes 3, 3', 4, 4', 5 and 5' are symmetrical about main lobe 2, as the emitter array is symmetrical and the three emitters are emitting with the same phase. However, by varying the phase of the excitation signals supplied to each emitter 1a, 1b and 1c of axis X1 by an electronic scanning, it is possible to focus and point the main lobe in different angles in the plane (X1, Y). In this case, the shooting plane P2 of main lobe 2, and the shooting planes P4 and P'4 of aliasing lobes 4 and 4', and the shooting planes of P3, P'3, P5 and P'5 of the side lobes 3,3', 5 and 5', whereby these secondary shooting planes are symmetrical about the shooting plane P2, are arranged around axis Z and are rotating around this axis in the plane (X1, Y), as illustrated by arrows F and F' in fig.2. The phase differences of the excitation signals supplied to each emitter 1a, 1b and 1c which are set so as to direct the phases to the acoustical pulses in a desired direction, must correspond to the differences of the propagation paths of the ultrasonic waves from individual emitters so as to yield a maximum of the field energy which propagates in the desired direction.

Simultaneously, the spatial energy distribution of the lobes vary, i.e. those secondary side lobes which are situated on the one side of the main lobe to which the main lobe turns due to the scanning (arrows F or F') decrease, and the ones situated on the opposite side increase, whereby the main lobe stays at a higher level. Therefore, the known methods are focusing on increasing main lobe, and decreasing secondary lobes, in order to avoid interference echoes. By successive shots, in which successive phase variations between the excitation signals supplied to the emitters are introduced, a scanning of the observation area from 0° to practically ± 90° can be achieved. By identifying the presence of one or more echoes, during the measuring of the echo of the main lobe, the location, configuration and distribution of objects in the scanned area is determined. Such a one-dimensional ultrasonic transducer phased array is described in Japanese patent JP 052357.

An example of a two-dimensional transducer array together with an electronic scanning method is described in *〈〈 Ultrasonic imaging system for robots using an electronic scanning method 〉〉*, S.Kuroda et al, Robotica (1984), volume 2, pages 47 to 53.

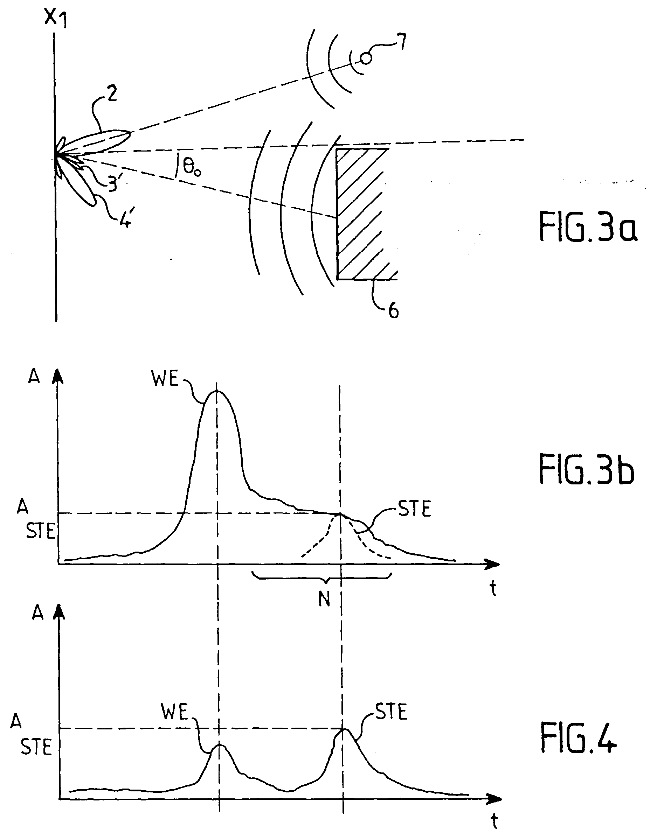

Fig. 3a shows one example of an observation area made up of a flat wall 6 and a small target 7. When this observation area is scanned with, for instance, a lobe pattern having a directivity of the type described above, the flat wall can generate a strong return echo. Fig.3b shows the amplitudes of the wall echo WE and the amplitude of the small target echo STE, with respect to time (or distance). The small target echo STE cannot be detected as its amplitude A_{STE} is hidden by (drowned into) the noise N generated by the multi-reflections of the strong echoes of the wall WE. Because of the weak signal/noise ratio, the small target echo STE cannot be identified. The strong returned echo can blind the acoustical detection system by preventing weak echo detection.

Therefore, there is an important need to develop a new type of ultrasonic scanning method improving the acoustic detection and positioning of small targets and/or low acoustic reflection targets, even in the vicinity of high acoustic reflection objects, which is easy to implement, and does not necessitate complex and expensive ultrasonic transducer systems.

### [Summary of the invention]

The purpose of this invention is to overcome the above deficiency and to improve the reception quality, by using a method for electronically controlling an ultrasonic transducer phased array of the type described above, which is characterized by the following steps :
- detecting at least one strong echo signal in at least one angular direction with respect to a reference axis of the transducer phased array, corresponding to the location of at least one high reflection object,
- controlling the transducer phased array for generating an acoustical lobe pattern for scanning the observation area including at least two acoustical lobes so as to position a zero sector (see definition below) between two ultrasonic beams on at least one identified direction.

Advantageously, a zero sector positioning is automatically implemented when a strong returned echo signal having a value higher than a predetermined value, is detected in said angular direction.

The transducer phased array can be controlled with a power weighting.

The configuration of the ultrasonic transducer phased array may be a one-dimensional or a two-dimensional configuration. Advantageously, the one-dimensional configuration consists in a line of ultrasonic transducers and the two-dimensional configuration consists in a star configuration or a combination of at least two lines of ultrasonic transducers arranged in staggered rows (quincunx). The star configuration may be a six-branch star.

Further, the configuration of transducers may be arranged on a plane surface or on a curved surface.

Preferably, the configuration of transducers comprises an odd number of ultrasonic transducers used as emitters, and the transducers used as receivers are the ones arranged at each end on the lines or branches.

Additional objects and features of the invention will appear from the following description in which the preferred embodiments are set forth in detail in connection with the accompanying drawings :
- figure 1 (already described) shows a known ultrasonic transducer phased array used for scanning an observation area, electronically controlled by a known control process,
- figure 2 (already described) shows the ultrasonic beam spatial distribution (i.e. the ultrasonic lobe pattern) in linear scale corresponding to the ultrasonic transducer phased array of figure 1,
- figures 3a and 3b (already described) show one example of an observation area to be scanned and the corresponding detected echo amplitudes,
- figure 4 shows the amplitudes of the echoes of the observation area of figure 3a, detected by using the method according to the invention, and
- figures 5a, 5b and 5c show ultrasonic lobe patterns in log scale of first, second and third examples of an implementation of the method according to the present invention, respectively.

### [Description of the embodiments of the invention]

After a scanning of an observation area with, for instance, an acoustical lobe pattern of the type described above, a first characteristic of the present invention consists in identifying the angular direction θ₀ of a strong returned echo corresponding to a high reflection target. This can be done by electronically identifying an echo signal having a value higher than a predetermined threshold value.

According to the main characteristic of the present invention, the transducer phased array is controlled so as to position a 〈〈 zero 〉〉 sector of a lobe pattern, i.e. a 〈〈 zero 〉〉 acoustic emission, on the identified angular position of the detected high reflection object in the observation area. A 〈〈 zero 〉〉 lobe sector of a lobe pattern is defined as being an angular sector between two lobes, wherein there is almost no acoustic emission (the ultrasonic beam spatial energy is zero), i.e. where there is no main, aliasing, nor side lobes. This can be implemented as soon as a returned echo having a high value is detected and can allow detecting the weak signal of a small target.

As shown in fig.4, by implementing such a zero positioning method, i.e. by identifying angular direction θ₀ perpendicular to the wall in the observation area, and positioning a zero sector on the corresponding angle θ₀, the wall echo WE is highly attenuated as well as the noise due to multi-reflections of fig.3b. The amplitude A_{STE} of small target echo STE is no more hidden by the noise generated by the strong echoes of the wall, and may be identified.

Fig.5a shows an example of a lobe pattern 18 implementing the method according to the invention. This lobe pattern is generated by a transducer array, which is made of the seven aligned transducers of fig.1 controlled as emitters.

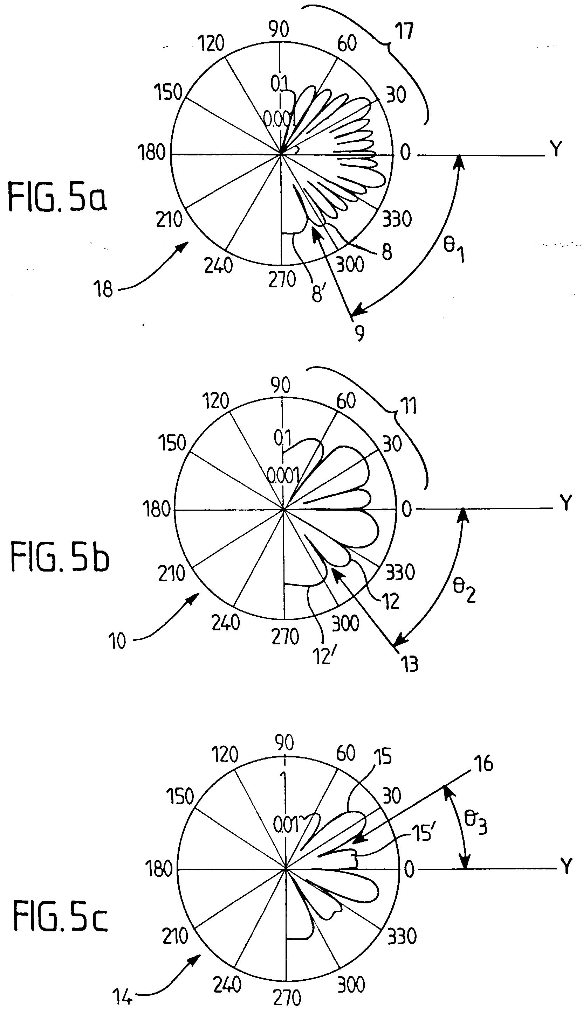

For better understanding of the invention, fig. 5a, 5b and 5c are logarithmic representations of the spatial distribution of the acoustical lobes. In these representations, main lobe, aliasing lobes and side lobes have about the same size, and the zero sectors are easier to visually identify.

In fig.5a, a zero angular sector 9 is located between two adjacent lobes 8 and 8'. The transducer phased array is controlled so as to position the angular sector 9 on angle θ₁ corresponding to the detected strong echo direction, with respect to the reference axis Y of fig.1, which is perpendicular to the transducer array plane and which is going through the center of it. The detected high reflection object is thus hidden from the acoustical energy beams (lobes). In this case, the experiments have shown that the values of the other return echo signals increase in response to the acoustical lobes 17 of the lobe pattern 18.

The width of the zero angular sectors, as well as the width of the lobes, can be increased, or decreased, by weighting the excitation signals supplied to the ultrasonic transducer phased array. The increasing or decreasing of the zero angular sectors may advantageously be used when the observation area comprises a sector with several reflection points or a multiple reflection point object. Once the zero angular sector is positioned on right angle θ₁, the lobe pattern can be modified so as to get the best covering and acoustic energy distribution on the rest of the observation area.

Further, the transducer phased array can be controlled so as to scan the observation area with the zero angular sector to be positioned on another angle, in the same way as the scanning with a main lobe of a lobe pattern.

In case there are several high reflection targets, the transducer phased array can be controlled in order to position several zeros of a lobe pattern on each target angular position. In this case, another problem can rise if the high reflection targets are more numerous than possible zero positioning. In that case, a time window, corresponding to a filter letting through the echoes for some time, is applied on the reception signals by controlling the ultrasonic transducer as emitters, so as to decrease the number of high level echoes, by removing first furthest echoes, until the number of high level echoes can be hidden by the available zeroes.

Fig.5b shows another example of an acoustic lobe pattern 10 in which the number of lobes 11 is smaller than in the previous example (less zero sectors), but wider. This pattern is generated by a transducer phased array made of three aligned transducers 1a, 1b and 1c of fig.1, controlled as emitters. By controlling the acoustic transducer phased array, a zero angular sector 13 can be positioned on angle θ₂ if a strong echo is detected on the direction of angle θ₂ .

Fig.5c shows a third example of an acoustic lobe pattern 14 used for implementing the method according to the invention. This pattern is generated by the same transducer phased array as the one on figure 3a, but the excitation signals which are supplied to the transducers are weighted by controlling the power supplied to each emitter. This weighting may be made, for instance, by connecting the emitters to a resistive array or a variable amplifier array, which can attenuate the supplied signal. The weighting of the transducer array permits to enlarge the zero sectors, as zero sector 16 between lobes 15 and 15' on direction θ₃. Another way to enlarge the zero sector is to decrease the excitation signal frequency.

The acoustic transducer arrays used in these examples can be constituted by a star configuration array of 19 acoustic transducers which have a radius of 0.005m, and which are separated by a distance of 0.01m. The frequency of excitation signals can be 40kHz.

However, the transducer array used in the present invention may have any other configuration. It may have a one-dimensional configuration as a line of transducers, or a two-dimensional configuration, as for instance, a star configuration or a combination of at least two lines of transducers arranged in staggered rows. The transducer array may be arranged on a plane or curved surface (three-dimensional configuration).

Advantageously, the configuration of transducers may comprise an odd number of transducers used as emitters, and the transducers used as receivers may be the ones located at the end of each line or branch.

In the present invention only a few ultrasonic transducers may be used for scanning, and they are easily available on the market. Such an apparatus has low cost and a compact size.

### [Industrial application]

The present invention has a large range of applications. For instance, it can be used for vehicles (back sonar system, automatic car parking, collisions avoidance), in industry (automatic parts distribution, automatic packaging, remote control of objects on assembly lines, cleaning robots, etc.), at home (automatic floor cleaning) and for public health (sonar for blind persons, movement detection for elderly people).

## Claims

1. Method for electronically controlling an ultrasonic transducer phased array to scan at least one angular sector of an observation area in the air, the ultrasonic transducers being usable as emitters or receivers and being arranged so that an acoustical lobe pattern with at least two ultrasonic beams can be generated in the observation area, characterized by the following steps:
• detecting at least one strong echo signal (WE) in at least one angular direction (θ₀, θ₁,θ₂,θ₃)with respect to a reference axis (Y) of the transducer phased array (1), corresponding to the direction of at least one high reflection object,
• controlling the transducer phased array (1) for generating an acoustical lobe pattern (2,3,3', 4,4', 5,5') for scanning the observation area including at least two acoustical lobes (8,8'; 12,12'; 15,15) so as to position a zero sector (9; 13; 16) between two ultrasonic beams (8,8'; 12,12'; 15,15') on at least one identified direction (θa, θ₁,θ₂,θ₃).

2. Method according to claim 1, characterized in that a zero sector positioning (9; 13; 16) is automatically implemented when a strong returned echo signal (WE) having a value higher then a predetermined threshold value is detected.

3. Method according to claim 1 or 2 characterized in that the transducer phased array (1) is controlled with a power weighting.

4. Method according to claim 1, 2 or 3 characterized in that said transducer phased array (1) has a one-dimensional configuration.

5. Method according to claim 4, characterized in that said one-dimensional configuration is a line of transducers (1a, 1b, 1c).

6. Method according to any one of claims 1 to 5 characterized in that said transducer phased array has a two-dimensional configuration (1).

7. Method according to claim 6, characterized in that said two-dimensional configuration is a star configuration.

8. Method according to claim 6, characterized in that said two-dimensional configuration is a combination of at least two lines of ultrasonic transducers arranged in staggered rows.

9. Method according to any one of claims 1 to 8, characterized in that the configuration of transducers comprises an odd number of ultrasonic transducers used as emitters.

10. Method according to one of claims 5, 7 and 8, characterized in that the transducers used as receivers are the ones located at each end of said lines of ultrasonic transducers.

11. Method according to one of claims 4 to 10 characterized in that the configuration of ultrasonic transducers is arranged on a curved surface.
